**Europäisches Patentamt**

**European Patent Office**

**Office européen des brevets**

(19)

(11) Veröffentlichungsnummer : **0 148 318**
**B1**

(12) EUROPÄISCHE PATENTSCHRIFT

(45) Veröffentlichungstag der Patentschrift :
15.04.87

(21) Anmeldenummer : 84109096.2

(22) Anmeldetag : 01.08.84

(51) Int. Cl.⁴ : **E 05 F 15/00, E 05 F 15/16**

(54) Sicherheitsschaltung für elektromotorisch angetriebene Fensterheber für Automobile und ähnliche Fahrzeuge.

(30) Priorität : 22.12.83 DE 3346366

(43) Veröffentlichungstag der Anmeldung :
17.07.85 Patentblatt 85/29

(45) Bekanntmachung des Hinweises auf die Patenterteilung : 15.04.87 Patentblatt 87/16

(84) Benannte Vertragsstaaten :
AT CH FR GB IT LI SE

(56) Entgegenhaltungen :
DE-A- 3 206 243
GB-A- 2 013 428
GB-A- 2 053 513

(73) Patentinhaber : HELMUT HUND K.G.
Postfach 29 Wetzlarer Strasse 145
D-6330 Wetzlar-Nauborn (DE)

(72) Erfinder : Herr, Klaus-Dieter, Dipl.-Ing.
Burgstrasse 7
D-6349 Edingen (DE)

(74) Vertreter : Riecke, Manfred
Neuköllner Strasse 8
D-6333 Braunfels (DE)

## Beschreibung

Die Erfindung betrifft eine Sicherheitsschaltung für elektromotorisch angetriebene Fensterheber, insbesondere in Automobilen.

Sicherheitsschaltungen der genannten Art sind bereits bekannt. Sie dienen dazu, ein unbeabsichtigtes Einklemmen von Körperteilen zu verhindern, wenn die Fensterscheibe mit Motorkraft in Schließrichtung, d. h. aufwärts bewegt wird. Mit derartigen Sicherheitsschaltungen wird eine Reversierung des Antriebsmotors bewirkt, wenn die Fensterscheibe bei ihrer Aufwärtsbewegung auf einen Widerstand trifft. Wenn dies der Fall ist, nimmt der Antriebsmotor mehr elektrischen Strom auf als beim normalen Schließvorgang. Es ist bekannt, diese erhöhte Stromaufnahme als Kriterium für die Umschaltung der Drehrichtung zu benutzen (DE-A-32 06 243).

Allerdings ist die Stromaufnahme des Motors auch bei einem normalen Schließvorgang keineswegs immer die gleiche sondern hängt stark von äußeren Bedingen, wie z. B. Außentemperatur, Abnutzungsgrad der Fensterführung usw. ab. Es kann daher nicht einfach die absolute Stromhöhe als Umschaltkriterium für die Motordrehrichtung verwendet werden. Deshalb ist bereits vorgeschlagen worden, nicht die Stromhöhe, sondern nur einen plötzlichen Stromanstieg (di/dt) als Umschaltkriterium zu verwenden. Dabei wird von dem Gedanken ausgegangen, daß — ohne Rücksicht auf die tatsächliche momentane Stromaufnahme des Motors — ein Abbremsen der Scheibe in ihrer Aufwärtsbewegung, z. B. durch eine eingeklemmte Hand, auf jeden Fall einen momentanen Stromanstieg zur Folge hat. Das Auftreten eines solchen positiven di/dt ist somit immer ein Zeichen für eine Einklemmung, und es ist folgerichtig, dieses positive di/dt als Umschaltkriterium zu benutzen.

Dabei ergibt sich jedoch die Schwierigkeit, daß beim Anlaufen des Motors ebenfalls ein plötzlicher starker Stromanstieg auftritt (peak), der erst nach einigen Millisekunden wieder bis zum normalen Betriebsstrom absinkt. Dieser starke Stromanstieg darf von der Schaltung natürlich nicht als Umschaltkriterium gewertet werden, denn sonst wäre es niemals möglich, das Fenster zu schließen. Es ist daher bereits vorgeschlagen worden, ein positives di/dt nur dann als Umschaltkriterium zu werten, wenn gleichzeitig die Motordrehzahl n > 0 ist. Dieser zusätzlichen Bedingung liegt der Gedanke zugrunde, daß der Anfangsstrom dann bereits wieder abfällt, wenn sich der Motor anfängt zu drehen. Man befindet sich dann nämlich bereits wieder auf der negativen Flanke des Anfangspeaks der Stromkurve.

Diese Schaltung hat jedoch den Nachteil, daß, wenn eine Hand, ein Kopf oder dgl. bereits beim Anfahren der Scheibe eingeklemmt ist, dieser Körperteil zunächst einmal dem vollen Druck der Scheibenkante ausgesetzt ist, den diese etwa mit dem Anlaufstrom auf den eingeklemmten Körperteil ausübt. Erst wenn der Anlaufstrom abgesunken ist, kann dann das positive di/dt zur Drehrichtungsumkehr führen. Sollte die Einklemmung bereits eine solche sein, daß der Motor gar nicht mehr anlaufen kann, so daß n = 0 bleibt, so wird sogar die Sicherheitsschaltung gar nicht erst wirksam, und die Hand bleibt mit voller Kraft eingeklemmt.

Dieser Nachteil hat vor allem dann praktische Bedeutung, wenn die Scheibe nur soweit geöffnet ist, daß jemand gerade noch seine Finger zwischen obere Scheibenkante kante und oberen Fensterrahmen stecken kann. Wenn dann der Schließknopf des Fensters betätigt wird, drückt die Scheibe für einen Moment mit voller Kraft gegen die Finger, bevor die Sicherheitsschaltung anspricht, sofern sie dies überhaupt tut.

Der Erfindung liegt die Aufgabe zugrunde, diesen Nachteil zu vermeiden und eine Sicherheitsschaltung anzugeben, bei der auch der Anlaufstrom des Motors nicht zu einem Einklemmen dieses Körperteiles führen kann.

Diese Aufgabe ist durche eine Schaltung gelöst, welche die in den Ansprüchen angegeben Merkmale aufweist.

Der Erfindung liegt der Gedanke zugrunde, die Schaltung derart auszulegen, daß bei Betätigung der Fensterschließtaste, -knopf oder dgl. der Motor zunächst in Öffnungsrichtung der Fensterscheibe anläuft, womit die Scheibenkante von dem von der Einklemmung bedrohten Körperteil hinweg bewegt wird, so daß ein Druck auf diesen Körperteil gar nicht erst ausgeübt wird.

Die Schaltung ist im weiteren dann derart angelegt, daß nach einer gewissen Zeit bzw. nach einem vorbestimmten Abwärtsweg der Fensterscheibe die Drehrichtung des Motors automatisch umgekehrt wird, so daß sich die Scheibe erst dann aufwärts zu bewegen beginnt. Dabei ist es ein besonderes Merkmal der erfundenen Schaltung, daß der Abwärtsweg der Scheibe gerade so groß bemessen ist, daß der positive Anlaufstrom des Motors nach dessen Drehrichtungsumkehr bereits wieder auf den Normalstrom abgesunken ist, wenn die Scheibe wieder ihre Ausgangsposition erreicht hat. Sollte sich also der von der Einklemmung bedroht gewesene Körperteil noch im Scheibenweg befinden, so wird die Sicherheitsschaltung sofort wirksam, wenn die Scheibenkante gegen diesen Körperteil trifft.

Damit ist sichergestellt, daß der von der Einklemmung bedrohte Körperteil auf keinen Fall erst einmal mit der Kraft des Anlaufstromes eingeklemmt wird, bevor die Sicherheitsschaltung anspricht. Der Nachteil der Sicherheitsschaltung nach dem Stand der Technik ist somit durch die erfundene Sicherheitsschaltung überwunden.

Aber genau wie bei der Sicherheitsschaltung nach dem Stand der Technik dient auch bei der erfundenen Sicherheitsschaltung ein kurzzeitiger Anstieg des Motorstromes, d. h. ein positives di/dt als Umschaltkriterium für die Reversierung des Antriebsmotors. Es müssen daher auch in der erfundenen Schaltung Maßnahmen getroffen werden, um die beim Anlaufstrom auftretende positive di/dt-Flanke als Umschaltkriterium auszuschalten bzw. unwirksam zu machen.

Gemäß einem weiteren Gedanken der Erfindung kann dies entweder dadurch geschehen, daß in der Schaltung ein Baustein integriert ist, der die Auswertung eines plötzlichen Stromanstieges zur Motorreversierung erst nach Ablauf einer gewissen Zeit nach Anlaufbeginn des Motors zuläßt (Zeitglied), oder auch dadurch, daß in der Schaltung ein Baustein enthalten ist, der die Auswertung eines plötzlichen Stromanstieges zur Motorreversierung erst zuläßt, nachdem in der positiven Stromkurve das erste negative di/dt aufgetreten ist. Dies wäre ein Baustein, der dieses erste negative di/dt als Triggerflanke benutzt.

In der Zeichnung ist die Erfindung an Hand mehrerer Strom/Zeit-Kurven bzw. Weg/Zeit-Kurven näher erläutert.

Es zeigen :

Figur 1 die Strom/Zeit-Kurve einer Sicherheitsschaltung nach dem Stand der Technik,

Figur 2 die Strom/Zeit-Kurve der erfundenen Sicherheitsschaltung,

Figur 3 die der Kurve nach Fig. 2 entsprechende Weg/Zeit-Kurve,

Figur 4 schematisch ein Blockschaltbild der erfundenen Schaltung, in dem diese mit diskreten Bausteinen aufgebaut ist,

Figur 5 schematisch ein Blockschaltbild der erfundenen Schaltung, in dem diese mit einem Mikroprozessor aufgebaut ist.

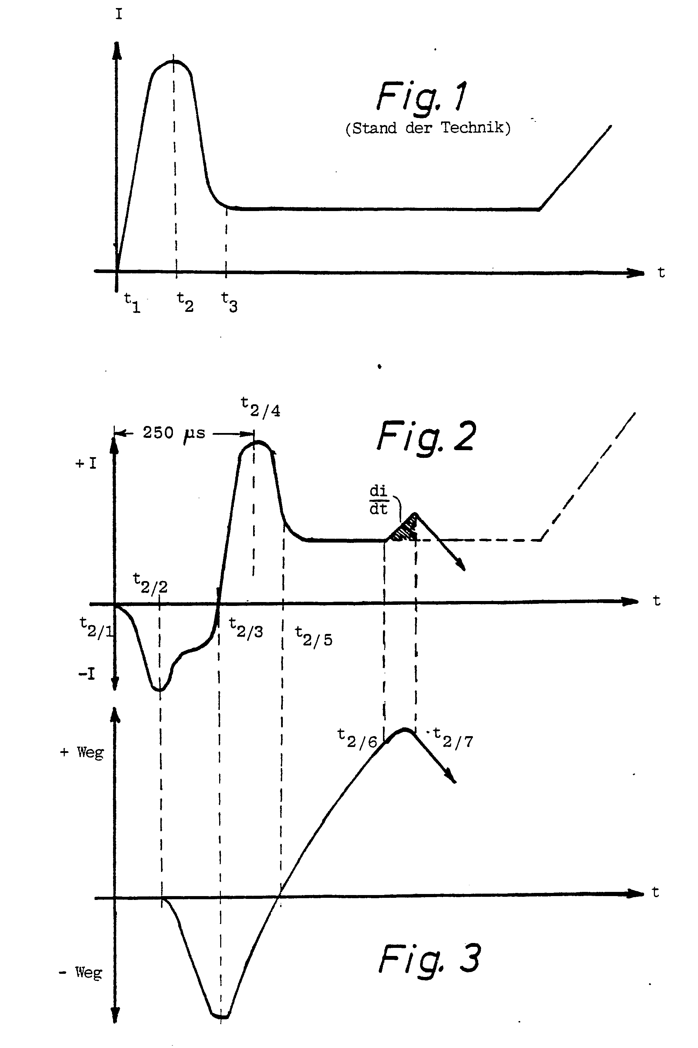

Fig. 1 zeigt den Stromverlauf im Antriebsmotor in Abhängigkeit von der Zeit, bei einer Sicherheitsschaltung nach dem Stand der Technik. Im Punkte $t_1$ wird die Schließtaste des Motors betätigt. Daraufhin steigt der Strom zu einer Spitze an bis zum Punkt $t_2$. Dabei ist ein positives di/dt vorhanden, aber dieses erste positive di/dt wird nicht als Umschaltkriterium zur Motorreversierung bewertet, da zwischen den Zeiten $t_1$ und $t_2$ die Motordrehzahl n noch gleich Null ist. Fängt der Motor an sich zu drehen, so fällt der Strom bereits wieder ab, d. h. man befindet sich im Zeitbereich zwischen $t_2$ und $t_3$. Jedes nachfolgende di/dt wird aber dann tatsächlich als Motorumschaltkriterium ausgewertet. Die Nachteile, die mit einer derartigen Schaltung hinsichtlich der Möglichkeit des kurzzeitigen Einklemmens eines Körperteiles verbunden sind, wurden in der Beschreibungseinleitung eingehend diskutiert.

Fig. 2 zeigt im Vergleich dazu den Stromverlauf bei der erfundenen Sicherheitsschaltung. Im Punkte $t_{2/1}$ wird die Betätigungstaste geschlossen, und es ist erkennbar, daß daraufhin der Strom zunächst einmal in Gegenrichtung durch den Motor fließt. Er erreicht dabei im Punkte $t_{2/2}$ einen negativen peak. Wie aus einem Vergleich mit der zugehörigen Weg/Zeit-Kurve der Fensterscheibenbewegung der Fig. 3 ersichtlich, hat sich der Motor bis zum Punkte $t_{2/2}$ noch nicht bewegt. Der Motor läuft aber im Punkte $t_{2/2}$

an und bewegt die Scheibe in Öffnungsrichtung. Gleichzeitig wird im Punkte $t_{2/2}$ die Stromflußrichtung im Motor automatisch umgeschaltet. Der Stromfluß im Motor steigt daher vom Punkte $t_{2/2}$ wieder in positiver Richtung an, befindet sich jedoch bis zum Punkte $t_{2/3}$ insgesamt noch im negativen Bereich. Daher dreht sich der Motor auch bis zum Punkte $t_{2/3}$ noch in Öffnungsrichtung und bewegt in diesem Bereich die Fensterscheibe abwärts. Letztere erreicht dabei im Punkte $t_{2/3}$ ihre tiefste Stellung.

Vom Punkte $t_{2/3}$ ab verläuft die Stromkurve im positiven Bereich. Dies bedeutet eine Drehrichtungsumkehr des Motors im Punkte $t_{2/3}$ und für die Fensterscheibe eine Umkehr in ihrer Bewegungsrichtung. Vom Punkte $t_{2/3}$ ab bewegt sich dieselbe wieder aufwärts, und zwar zunächst mit etwas erhöhter Geschwindigkeit, da der Anlaufstrom des Motors bei dessen Drehbeginn in Schließrichtung zunächst wieder bis zum Punkte $t_{2/4}$ zu der Anlaufstromspitze ansteigt. Diese Anlaufstromspitze fällt dann wieder ab und erreicht etwa bei $t_{2/5}$ die normale Stromhöhe. Von da ab löst jeder plötzliche Stromanstieg, d. h. jedes positive di/dt, eine Umschaltung des Antriebsmotors aus.

Die gesamte Schaltung ist nun in der Weise dimensioniert, daß die Fensterscheibe dann, wenn der Strom bei $t_{2/5}$ seine normale Betriebsstärke erreicht hat, die Scheibe etwa gerade wieder ihre Ausgangsstellung erreicht hat. Sollte sich jetzt noch eine Hand in dieser Ausgangsstellung befinden, so würde sofort ein di/dt auftreten und den Motor bzw. die Scheibe auf Abwärtslauf schalten.

Aus den Fig. 2 und 3 ist somit deutlich erkennbar, daß bei Betätigung der Schließtaste das Fenster zunächst in Öffnungsrichtung anläuft und sich erst nach einem kurzen Abwärtslauf wieder aufwärts bewegt. Dabei ist wichtig, daß dann, wenn die Scheibe wieder in ihrer Ausgangsstellung angekommen ist, der Motorstrom schon auf seine normale Betriebshöhe abgesunken ist, so daß bei Bewegung der Fensterscheibe ab dieser Stellung nach oben, sofort die Sicherheitsschaltung wirksam werden kann, wenn ein Widerstand im Scheibenweg auftritt.

Es muß aber auch bei der erfundenen Sicherheitsschaltung dafür gesorgt sein, daß der erste Stromanstieg im Bereich zwischen $t_{2/2}$ bis $t_{2/4}$ nicht bereits zu einer Umschaltung des Antriebsmotors führt. Dies kann z. B. dadurch geschehen, daß in der Schaltung ein Zeitglied enthalten ist, das die Auswertung eines positiven di/dt zur Motorumschaltung erst nach einer bestimmten Zeitdauer nach Betätigung der Schließtaste zuläßt. Diese Zeitdauer kann nach einem gemessenen Erfahrungswert festgelegt werden und z. B. ca. 250 μs betragen, wie in Fig. 2 eingetragen.

Es kann aber auch in der Schaltung ein Bauelement enthalten sein, welches erst nach dem Auftreten des ersten negativen di/dt in der positiven Stromkurve ein positives di/dt als Umschaltkriterium zuläßt, d. h. ein Bauelement, welches die abfallende Flanke der Anlaufstromspitze als Triggerflanke wertet.

In Fig. 2 ist zwischen $t_{2/6}$ und $t_{2/7}$ ein plötzlicher Stromanstieg, d. h. ein positives di/dt eingezeichnet. Dem entspricht in Fig. 3 eine Umkehr der Bewegungsrichtung der Fensterscheibe.

Die in Fig. 2 gestrichelt eingezeichnete Linie zeigt den normalen Stromverlauf beim Schließen eines Fensters. Es fließen im Motor während des Verschiebeweges der Fensterscheibe etwa eine konstante Anzahl von Ampère ; wenn jedoch die Fensterscheibe am Ende des Verschiebeweges in den oberen Fensterrahmen einläuft, steigt die Stromstärke stark an. Es ist Stand der Technik, die Sicherheitsschaltung kurz vorher abzuschalten, damit die Scheibe nicht wieder abwärts läuft.

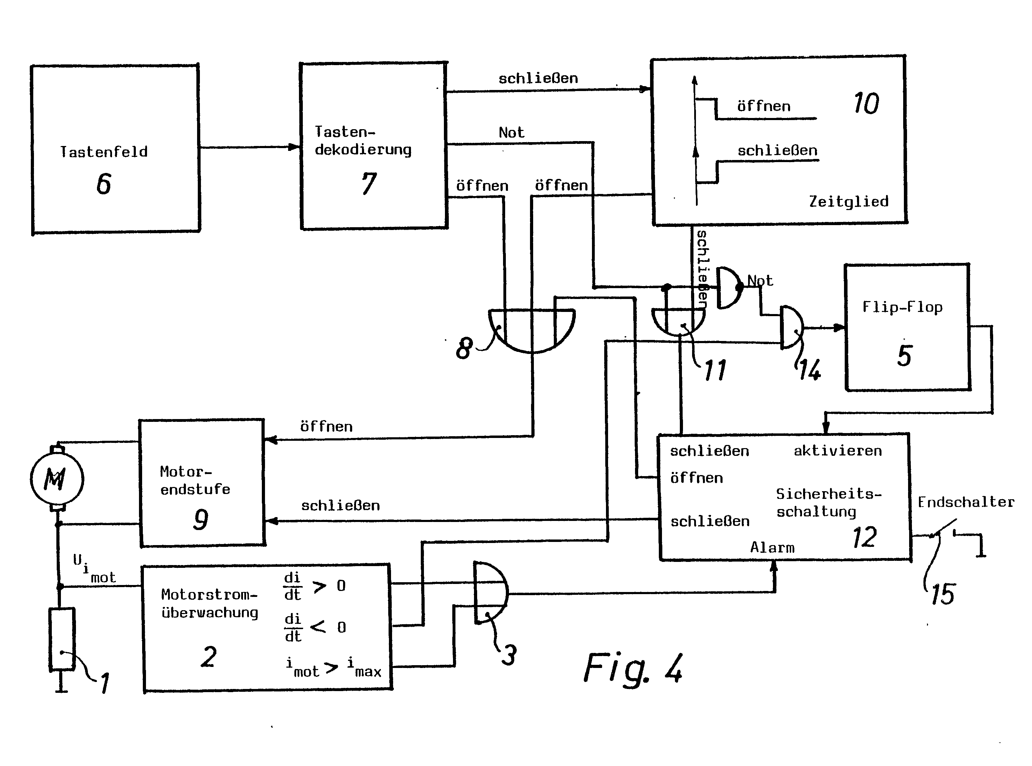

Bei der diskret aufgebauten Schaltung nach Fig. 4 ist der Motor mit M bezeichnet. Mit ihm in Reihe ist der Meßwiderstand 1 geschaltet. Die an ihm abgegriffene Spannung wird einer sinnvollen Elektronik zugeführt, die als Motorstromüberwachung 2 arbeitet, und die eine Entscheidung darüber trifft, ob ein positives di/dt oder ein negatives di/dt vorliegt, oder ob etwa ein Maximalstrom $i_{max}$ überschritten wird. Das von der Überwachung 2 ausgegebene Signal wird einem ODER-Gatter 3 zugeführt, wenn di/dt > 0 ist, oder wenn $i_{mot} > i_{max}$ ist, aber das Signal wird über ein UND-Gatter 14 einem Flip-Flop 5 zugeführt, wenn di/dt < 0 ist.

Dem Tastenfeld 6 ist eine Tastendekodierung 7 nachgeschaltet, die entsprechend der Tastenbetätigung ein Signal ausgibt. Dieses Signal kann z. B. das Signal « Öffnen » sein. Ein solches Öffnungs-Signal wird über ein ODER-Gatter 8 direkt an die Motor-Endstufe 9 gegeben, die den Motor in Öffnungsrichtung anlaufen läßt. Dieses Öffnungs-Signal ist im vorliegenden Zusammenhang allerdings weniger interessant und ist nur der Vollständigkeit halber erwähnt.

Wird aber in der Tastendekodierung festgestellt, daß die Tastenbetätigung auf « Schließen » gerichtet war, so gibt die Tastendekodierung 7 dieses Signal an ein Zeitglied 10. Dieses Zeitglied 10 gibt zunächst über eine vorbestimmte Zeit über das ODER-Gatter 8 ein Signal « Öffnen » an die Motorendstufe, so daß der Motor in Öffnungsrichtung der Scheibe anläuft. Es ist dies der Zeitbereich $t_{2/1}$-$t_{2/2}$ der Fig. 2.

Bei Erreichen von $t_{2/2}$ schaltet das Zeitglied 10 um und gibt über ein ODER-Gatter 11 das Signal « Schließen » an die eigentliche Sicherheitsschaltung 12. Von dieser Sicherheitsschaltung geht das Schließsignal dann direkt an die Motorendstufe 9.

Es sind aber an die Sicherheitsschaltung 12 noch zwei weitere Bausteine angeschlossen, nämlich das Flip-Flop 5 und das ODER-Gatter 3. Beide Bausteine werden gesteuert von der Motorstromüberwachung 2. Detektiert letztere ein di/dt < 0, so gibt die Überwachung 2 über das UND-Gatter 14 ein Signal an das Flip-Flop 5, und dieses aktiviert daraufhin die Sicherheitsschaltung 12. Dieser Vorgang spielt sich ab im Zeitenbereich

$t_{2/4}$-$t_{2/5}$ der Fig. 2. Es wird dadurch das negative di/dt als Triggerflanke für die Einschaltung der Sicherheitsschaltung 12 benutzt.

Wenn nach dieser Aktivierung der Sicherheitsschaltung von der Motorstromüberwachung 2 ein di/dt > 0 sensiert wird, so wird dieses Signal über das ODER-Gatter 3 der Sicherheitsschaltung zugeführt und hat dort die Funktion eines Alarmsignals, d. h. die Sicherheitsschaltung gibt über das ODER-Gatter 8 ein Öffnungssignal an die Motorendstufe 9. Dies ist die eigentliche Sicherheitsfunktion der Sicherheitsschaltung, nämlich das automatische Öffnen bzw. die Abwärtsbewegung der Fensterscheibe, wenn ein Körperteil oder dgl. von der Scheibe eingeklemmt wird und damit ein di/dt > 0 hervorruft.

Außerdem ist noch eine Notschaltung vorgesehen, die ebenfalls über das Flip-Flop 5 und das ODER-Gatter 11 verläuft. Wird die Nottaste gedrückt, so wird die Sicherheitsschaltung ausgeschaltet und die Motorendstufe 9 erhält den Befehl, den Motor mit $i_{max}$ in Schließrichtung laufen zu lassen.

Der Endschalter 15 wird geschlossen und setzt die Sicherheitsschaltung außer Funktion, kurz bevor die Scheibe oben gegen den Fensterrahmen läuft.

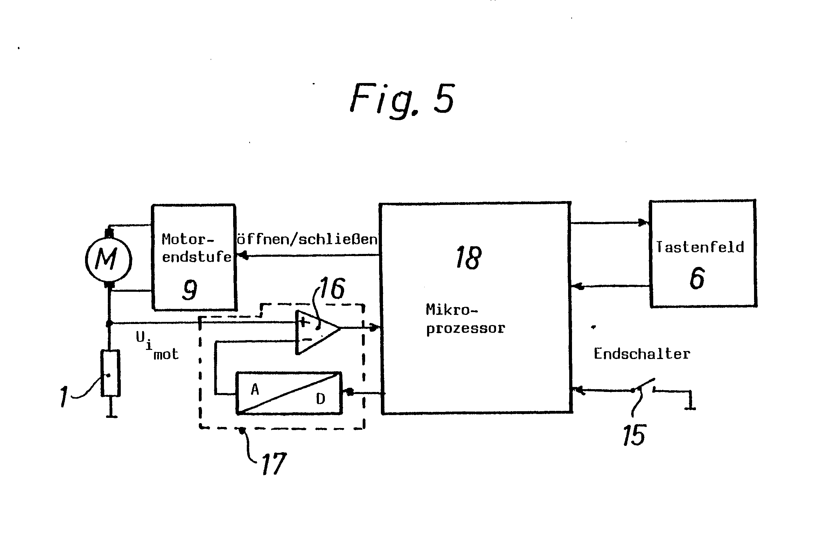

Bei der Mikroprozessorschaltung gemäß Fig. 5 ist ebenfalls der Motor M gezeigt, in dessen Stromkreis der Meßwiderstand 1 liegt. An ihm wird eine dem Motorstrom analoge Spannung abgegriffen, die einem Komparator 16 zugeführt wird. An den Komparator ist außerdem ein D/A-Wandler 17 angeschlossen, der von dem Mikroprozessor 18 gesteuert wird.

Außerdem sind in der Schaltung noch das Tastenfeld 6, die Motorendstufe 9 und der Endschalter 15 vorhanden.

Die am Meßwiderstand 1 anliegende Spannung ist ein Maß für den Motorstrom. Der Prozessor 18 ermittelt mittels A/D-Wandlung den jeweils aktuellen Motorstrom und überwacht diesen. Sollte ein positives di/dt oder eine Überschreitung des Motorstromes ermittelt werden, so wird vom Prozessor 18 die Reversierung der Scheibenbewegung eingeleitet.

Die Funktionen Bewegungsrichtungsdetektierung aus dem Tastenfeld, Unterdrückung des Anlaufspitzenstromes usw. sind im Programme des Mikroprozessors enthalten.

**Patentansprüche**

1. Sicherheitsschaltung für elektromotorisch angetriebene Fensterheber in Automobilen und ähnlichen Fahrzeugen, bei der ein plötzlicher Anstieg des Motorstromes (= positives di/dt) eine Umschaltung der Drehrichtung des Antriebsmotors bewirkt, dadurch gekennzeichnet, daß die Schaltung derart ausgelegt ist, daß bei Betätigung der Fensterschließtaste ($t_{2/1}$) sich der Antriebsmotor (M) in Gegenrichtung dreht und die Fensterscheibe für eine definierte Zeit ($t_{2/3}$) bzw. über einen definierten Weg in Öffnungsrichtung bewegt, daß dann eine Umschaltung der Motordrehrichtung erfolgt, daß die Drehzeit des Motors (M) in Öffnungsrichtung und anschließend in Schließrichtung derart aufeinander abgestimmt ist, daß der Motorstrom bereits seinen Normalwert erreicht hat, wenn die Fensterscheibe wieder ihre Ausgangsposition ($t_{2/5}$) erreicht hat, und daß in der Schaltung ein Baustein enthalten ist, der bewirkt, daß das positive di/dt des Anlaufstromes als Umschaltkriterium ausgeschaltet wird.

2. Sicherheitsschaltung nach Anspruch 1, dadurch gekennzeichnet, daß der das positive di/dt des Anlaufstromes als Umschaltkriterium ausschaltende Baustein ein Zeitglied (10) ist, das die Auswertung eines positiven di/dt erst nach Ablauf einer vorgegebenen Zeit zuläßt.

3. Sicherheitsschaltung nach Anspruch 1, dadurch gekennzeichnet, daß der das positive di/dt des Anlaufstromes als Umschaltkriterium ausschaltende Baustein ein Schaltungselement ist, welches das zweite negative di/dt des Anlaufstromes als Triggerflanke wertet und erst in Abhängigkeit von deren Auftreten die Auswertung deines positiven di/dt zuläßt.

## Claims

1. Safety circuit for motor-driven window lift assemblies for automobile vehicles and similar vehicles wherein a sudden increase in motor current (= positive di/dt) is decisive for a reverse in the sense of motor rotation, characterized in that the circuit is so designed that upon actuation of the window-close button ($t_{2/1}$) the motor (M) rotates in the opposite direction, thereby displacing the window pane through a predetermined period of time ($t_{2/3}$) or across a predetermined path, respectively, in the window-open direction ; that thereafter a reverse of the direction of the motor rotation occurs ; that the time of motor (M) rotation in the window-open direction and thereafter in the window-close direction is so adjusted that the motor current has already settled to its normal value when the window pane has again reached its starting position ; and that the circuit comprises an element for eliminating the positive di/dt of the starting current as a criterion for the motor reverse.

2. Safety circuit as claimed in Claim 1, characterized in that the element for eliminating the positive di/dt of the starting current as the criterion for the motor reverse is a time function element (RC-element) which permits the evaluation of a positive di/dt only after a predetermined period of time has elapsed.

3. Safety circuit as claimed in Claim 1, characterized in that the element for eliminating the positive di/dt of the starting current as the criterion for the motor reverse is an element which values the second negative di/dt of the starting current as the trigger edge and permits an evaluation of a positive di/dt only in dependence of the occurrence of said negative di/dt.

## Revendications

1. Circuit de sécurité de mécanismes d'actionnement pour moteurs électriques de glaces de fenêtres d'automobiles ou véhicules analogues, dans lequel une augmentation soudaine du courant du moteur (= di/dt positif) entraîne une inversion du sens de rotation du moteur d'actionnement, caractérisé en ce que le circuit est réalisé de telle façon que lors de l'actionnement de la touche de fermeture de la fenêtre ($t_{2/1}$) le moteur d'actionnement (M) tourne en sens inverse et déplace la glace de la fenêtre pour une durée définie ($t_{2/3}$), ou sur une course définie, dans le sens de l'ouverture, en ce qu'il se produit ensuite une inversion du sens de rotation du moteur, en ce que le temps de rotation du moteur (M) dans le sens de l'ouverture et dans le sens de la fermeture qui suit, sont accordés de telle manière l'un par rapport à l'autre que le courant du moteur atteint à nouveau sa valeur normale lorsque la glace de la fenêtre se retrouve dans sa position initiale ($t_{2/5}$), et en ce que le circuit comporte un composant qui agit afin que les di/dt positif du courant de démarrage soit éliminé en tant que critère pour l'inversion du sens de rotation.

2. Circuit de sécurité conforme à la revendication 1, ci-dessus, caractérisé en ce que le composant éliminant en tant que critère d'inversion du sens de rotation le di/dt positif du courant de démarrage, est un organe de temporisation (10) qui n'autorise l'exploitation d'un di/dt positif qu'après une durée prédéterminée.

3. Circuit de sécurité conforme à la revendication 1, caractérisé en ce que le composant éliminant en tant que critère d'inversion du sens de rotation le di/dt positif du courant de démarrage, est un élément de circuit qui exploite le deuxième di/dt négatif du courant de démarrage comme flanc de déclenchement et n'autorise l'exploitation d'un di/dt positif qu'après l'apparition dudit flanc de déclenchement.

*Fig. 1*
(Stand der Technik)

*Fig. 2*

*Fig. 3*

Tastenfeld

6

Tastendekodierung

7

schließen

öffnen   öffnen

Not

öffnen

öffnen

schließen

Not

Zeitglied

10

8

11

14

Flip-Flop

5

Motorendstufe

9

schließen

schließen   aktivieren

öffnen

Sicherheitsschaltung

schließen

Alarm

12

Endschalter

15

$U_{i_{mot}}$

Motorstromüberwachung

2

$\dfrac{di}{dt} > 0$

$\dfrac{di}{dt} < 0$

$i_{mot} > i_{max}$

3

M

1

*Fig. 4*

Fig. 5

Tastenfeld
6

Endschalter
15

Mikroprozessor
18

öffnen/schließen

16

17

A / D

Motorendstufe
9

M

$U_{i_{mot}}$

1